# EUROPEAN PATENT SPECIFICATION

(11) **EP 1 724 710 B1**
(45) Date of publication and mention of the grant of the patent: **08.04.2009**
(21) Application number: 06016361.5
(22) Date of filing: 24.12.2003
(51) Int. Cl.: G06K 19/07, G06K 7/00

(54) **Semiconductor device**
Halbleiterbauelement
Dispositif semi-conducteur

(30) Priority: 25.12.2002 JP 2002374168
(43) Date of publication of application: 22.11.2006
(62) Divisional of application: 03768181.4
(73) Proprietor: HITACHI, LTD., Chiyoda-ku Tokyo 100-8280 (JP)
(72) Inventor: Usami, Mitsuo, c/o Central Research Laboratory, Kokubunji-shi Tokyo (JP)
(74) Representative: Strehl Schübel-Hopf & Partner

(56) References cited:
- EP-A- 1 069 526
- EP-A2- 0 733 988
- JP-A- 7 140 236
- FINKENZELLER ET AL: "RFID-Handbuch" RFID HANDBOOK: GRUNDLAGEN UND PRAKTISCHE ANWENDUNGEN, XX, XX, 26 September 2002 (2002-09-26), pages 203-224, XP002341283

## Description

### TECHNICAL FIELD

The present invention relates to a semiconductor device and more particularly to a technology which is effective for application to the configuration of an IC chip with anti-collision control function, used for IC tag.

### BACKGROUND ART

As a means for controlling anti-collision with signals from plural IC tags to identify an IC tag by exchanging signals between a reception unit and plural IC tags, which the inventor of the present invention has considered, following technology can be considered.

First, the IC tag transmits an identification number contained in that IC tag by a bit corresponding to a transmission request from the reception unit. The reception unit sends back one bit of received identification number to the IC tag. Then, the IC tag compares the sent-back one bit with the transmitted one bit and if they are equal, it transmits a next one bit and if they are not equal, the transmission is stopped because it means that other IC tag exists. Then, if the IC tag transmits all bits and is notified that the reception unit has received the identification number properly, the IC tag terminates subsequent response completely. By repeating this sequence, even if plural IC tags exist, it is possible to recognize them individually (see, for example, WO98/21691).

Statistical time division multiple access (TDMA) methods for anti-collision control are described by Finkenzeller et al. in "RFID-Handbuch: Grundlagen und praktische Anwendungen", pages 203-224, XP002341283.

Further relevant prior art with respect to anti-collision control methods for communication with plural RFID tags is disclosed in EP-A-0 733 988, EP-A-1 069 526 and JP-A-07-140236.

### DISCLOSURE OF THE INVENTION

As a result of considering the technology for controlling anti-collision in the aforementioned IC tag or the like, following matters have been made evident.

For example, the first above-mentioned method requires a complicated logical circuit for identifying plural IC tags. As for the reason, because the IC tag does not transmit plural bits of the identification number continuously but repeats transmission/reception with a reception unit in the unit of a bit, a complicated command is necessary, the number of operating stages is large, a complicated flip-flop is necessary, switching of transmission/reception needs to be controlledin a complicated way, a memory address counter needs a complicated control and a data comparison circuit is required.

Due to complicatedness of this logical circuit, the size of the semiconductor is increased, thereby inducing an increase of cost of the semiconductor device, which is a cause which blocks prevailing of the IC tag.

Accordingly, an object of the present invention is to provide a semiconductor device having a small size anti-collision control function, the anti-collision control function being built up with a simple logic, such as an IC chip loaded on an IC tag.

The object is met by the present invention as defined in the appended claims.

The above-mentioned and other objects and novel features of the present invention will become apparent from a description of this specification and the accompanying drawings.

An outline of the subject matter disclosed in this specification is as follows.

A semiconductor device for sending information in non-contact condition comprises a memory which memorizes a first random number and information other than the first random number and is arranged for sending information in the memory with a time difference according to a numeric value of the first random number, this semiconductor device being characterized in that the first random number is set in a memory address counter of the semiconductor device for time difference control.

A semiconductor device contains a memory which memorizes the first random number and information other than the first random number, sends information in non-contact condition and is characterized in that the plural semiconductor devices operates synchronously with a clock from outside and when a reception unit located outside the semiconductor device detects that the plural semiconductor devices are operating, each semiconductor device sends out information in the memory of the semiconductor device with a time difference according to a numeric value of the first random number.

A semiconductor device contains a memory which memorizes the first random number and the second random number and other information than the first random number and the second random number, sends information in non-contact condition and is characterized in that the plural semiconductor devices operates synchronously with a clock from outside and when a reception unit located outside the semiconductor device detects that the plural semiconductor devices are operating, each semiconductor device sends out information in the memory of the semiconductor device with a time difference according to a numeric value of the first random number and further when the reception unit detects that the plural semiconductor devices possess the same first random numbers, each of the semiconductor devices sends out information in the memory of the semiconductor device with a time difference according to a numeric value of the second random number of the semiconductor device.

A semiconductor device has a memory which memorizes the first random number and other information than the first random number, sends information in the memory in non-contact condition with a time difference according to a numeric value of the first random number and is characterized in that the memory memorizes an error detection code and when the plural semiconductor devices operates synchronously with a clock from outside, the error detection code is sent out from the plural semiconductor devices and the reception unit receives the error detection code as a logical sum, recognizing that it is an error detection code which never appears when a single semiconductor device sends out so as to detect that the plural semiconductor devices are operating.

A semiconductor device has a memory which memorizes the first random number and information other than the first random number, sends information in the memory in non-contact condition with a time difference according to a numeric value of the first random number and is characterized in comprising a counter having a bit count equal to the first random number and that the first random number in the memory is set in the counter and the content of the counter is changed according to a clock from outside and when the content of the counter reaches a specified code, information in the memory is sent.

A semiconductor device has a memory which memorizes the first random number and information other than the first random number, sends information in the memory in non-contact condition with a time difference according to a numeric value of the first random number and is characterized in that carrier signal from outside the semiconductor device is changed from L level to H level and remains in that state over a specified time and after that, drops to the L level and after a predetermined time elapses, returns to H level, recognizing that a first clock comes.

A semiconductor device having a memory which memorizes the first random number and information other than the first random number, sends information in the memory in non-contact condition with a time difference according to a numeric value of the first random number and is characterized in further comprising a counter indicating an address of the memory and that counter performs count operation with the first random number set.

A semiconductor device has a memory which memorizes the first random number and the second random number and information other than the first and second random numbers, in which when plural semiconductor devices operate synchronously with a clock from outside and a reception unit detects that such plural semiconductor devices are operating, each of the semiconductor chips sends out information in the memory of the semiconductor device according to the first random number and further when the reception unit detects that the plural semiconductor devices possess the same first random number, each semiconductor device sends out information in the memory of the semiconductor device non-contact condition with a time difference according to a numeric value of the second random number, the semiconductor device being characterized in that the semiconductor device has a counter indicating an address of the memory and that counter performs count operation with the second random number set.

A semiconductor device has a memory which memorizes the first random number and the second random number and information other than the first and second random numbers, in which when plural semiconductor devices operate synchronously with a clock from outside when a reception unit detects that such plural semiconductor devices are operating, each of the semiconductor chips sends out information in the memory of the semiconductor device with a time difference according to the first random number and further when the reception unit detects that the plural semiconductor devices possess the same first random number, each semiconductor device sends out information in the memory of the semiconductor device non-contact condition with a time difference according to a numeric value of the second random number, the semiconductor device being characterized in that the semiconductor device has a counter indicating an address of the memory and that counter performs count operation with the second random number set and a specific modulation period exists after a last clock signal from outside is changed from H level to L level and after that specific period, carrier obtains a timing of returning to the amplitude of an initial carrier so as to realize a set for setting the second random number.

A semiconductor device has a memory which memorizes the first random number and the second random number and information other than the first and second random numbers, in which when plural semiconductor devices operate synchronously with a clock from outside and a reception unit detects that such plural semiconductor devices are operating, each of the semiconductor chips sends out information in the memory of the semiconductor device according to the first random number and further when the reception unit detects that the plural semiconductor devices possess the same first randomnumber, each semiconductor device sends out information in the memory of the semiconductor device non-contact condition with a time difference according to a numeric value of the second random number, the semiconductor device being characterized in that the semiconductor device has a counter indicating an address of the memory and that counter performs count operation with the second random number set and the semiconductor device contains a flip-flop which indicates that the counter is used as the counter for indicating an address.

The effects which can be obtained by the subject matter disclosed in this specification are as follows.
(1) An anti-collision control IC tag can be achieved with a simple logic circuit.
(2) Because no command is required, any complicated decoding circuit is not required and a logic can be built up simply.
(3) Because there are a number of repetitions on the operation stage, the quantity of the flip-flops to be controlled can be reduced, thereby making it possible to build up a simple logic.
(4) The memory address counter can be used for memory data transmission control also, thereby making it possible to build logic simply.
(5) As a result of (1) to (4), a semiconductor device capable of anti-collision control can be constructed in the size of 0.5 mm square or less.

### BRIEF DESCRIPTION OF THE DRAWINGS

FIG. 1 is a block diagram showing the configuration of a semiconductor device of a first example useful to understand the present invention.
FIG. 2 is a block diagram showing the configuration of a semiconductor device of an embodiment of the present invention.
FIG. 3 is a signal waveform diagram showing a reception signal of the semiconductor device according to a second example useful to understand the present invention.
FIG. 4 is an explanatory diagram showing a method for controlling anti-collision in case where plural IC tags exist.
FIGs. 5A to 5C are configuration diagrams showing an IC tag equipped with the semiconductor device of the present invention.

### BEST MODE FOR CARRYING OUT THE INVENTION

Hereinafter, illustrative examples and an embodiment of the present invention will be described in detail with reference to the accompanying drawings. In all drawings for explaining the examples and embodiments, like reference numerals are attached to the same components and duplicated description thereof is omitted.

### (First illustrative example)

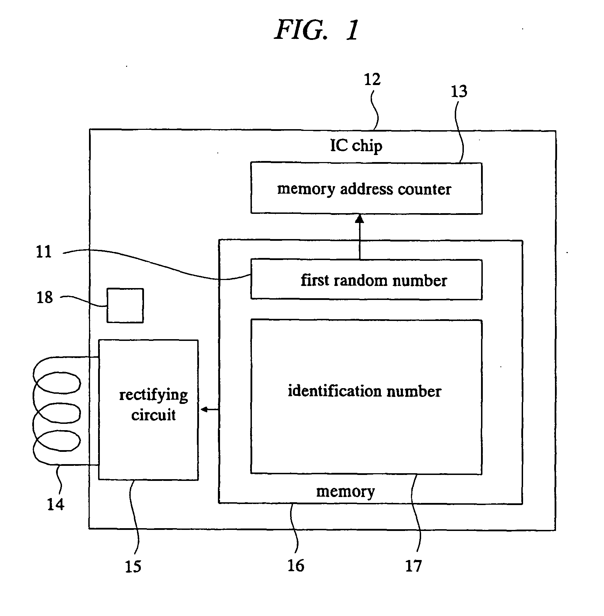

FIG. 1 is a block diagram showing a configuration of the semiconductor device of the first example useful to understand the present invention. A semiconductor device of this example is, for example, an IC chip 12, which comprises a memory address counter 13, an antenna 14, a rectifying circuit 15, a memory 16, a first flip-flop 18 and the like.

Information such as first random number 11 and identification number 17 is written in the memory 16.

The memory address counter 13 is a counter indicating bit address of the memory 16 and has the same bit number as the first random number 11.

Next, the operation of the first semiconductor device of the first example will be described with reference to FIG. 1. First, electromagnetic wave is received from outside by the antenna 14 so that DC voltage is generated in the rectifying circuit 15.

"H" is set in the first flip-flop 18 as the initial condition and at this time, the first random number 11 in the memory 16 is set in the memory address counter 13.

Next, receiving a clock from an external reception unit, the memory address counter 13 counts up or counts down.

When the content of the memory address counter 13 reaches a specified code (for example "0"), the first flip-flop 18 is set to "L" and information in the memory 16 such as the identification number 17 is sent to an external reception unit through the rectifying circuit 15 and the antenna 14.

That is, according to numerals of the first random number 11, information in the memory 16 such as the identification number 17 is sent from the IC chip 12 with a time difference.

If plural IC chips 12 for sending information in non-contact condition exist, the plural IC chips 12 operate at the same time synchronously with a clock from outside. In this case, because the first random number 11 is written in the memory 16 of each IC chip 12 at random preliminarily, each IC chip 12 sends information in the memory 16 of the same IC chip 12 with a time difference.

Because the memory address counter 13 indicates a bit address of the memory 16 and performs counting operation with the first random number 11 set, it can control anti-collision with such a simple circuit configuration.

Next, the function of the first flip-flop 18 will be briefly described. To realize the above-mentioned operation, a stage for setting the first random number 11 within the memory 16 in the memory address counter 13 is necessary. This is set when the output of the first flip-flop 18 is "H". When the first random number 11 set in the memory address counter 13 is counted up or counted down to "0" by a clock from the reception unit, the output of the first flip-flop 18 is set to "L" so that information in the memory 16 such as the identification number 17 is sent out according to a memory address.

### (Embodiment)

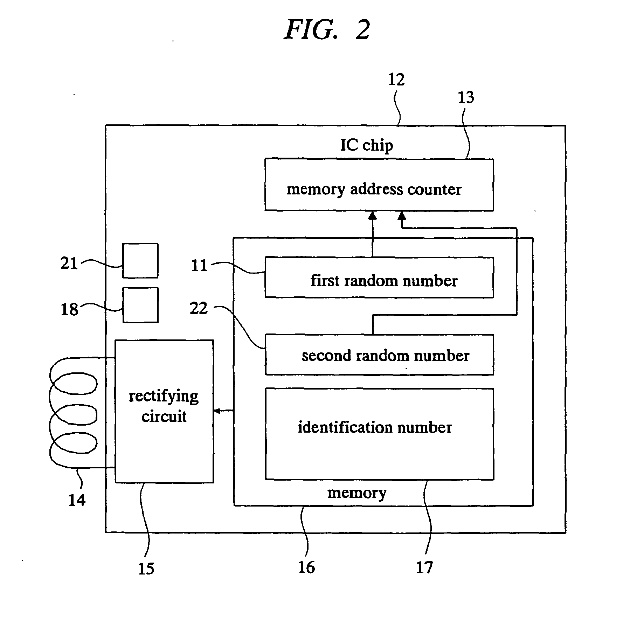

FIG. 2 is block diagram showing the configuration of the semiconductor device according to the embodiment of the present invention.

As shown in FIG. 2, the semiconductor device of the embodiment is, for example, an IC chip 12, which is equipped with a second flip-flop 21 in addition to the semiconductor device of the first example and includes a second random number 22 additionally as information in the memory 16.

Next, as shown in FIG. 2, operation of the semiconductor device of the embodiment will be described. Like the first example described previously, when electromagnetic wave is received from outside, DC voltage is generated in the rectifying circuit 15 and the first random number 11 in the memory 16 is set in the memory address counter 13 and then, the memory address counter 13 counts up or counts down.

When the content of the memory address counter 13 reaches a specified code (for example, "0"), the first flip-flop 18 is set to "L" and information in the memory 16 such as the identification number 17 is sent through the rectifying circuit 15 and the antenna 14.

Then, plural IC chips 12 operate at the same time synchronously with an external clock and when a reception unit outside the IC chip 12 detects that plural IC chips exist and operate, the respective IC chips 12 send information contained in the memory 16 of each IC chip 12 with a time difference according to a value of the first random number 11 and further when the reception unit detects that the plural IC chips 12 have the same first random number 11, the second flip-flop 21 is set to "H".

Then, the second random number 22 is set in the memory address counter 13 and counted up or counted down.

When the content of the memory address counter 13 reaches a specific code (for example, "0"), information in the memory 16 such as the identification number 17 is sent through the rectifying circuit 15 and the antenna 14.

Thus, after information in the memory 16 such as the identification number 17 is sent out according to a numeric value of the first random number 11 with a time difference and when the reception unit detects that the plural IC chips 12 possess the same random number 11, each IC chip 12 sends out information in the memory 16 such as the identification number 17 according to the second random number 22 with a time difference.

The memory address counter 13 indicates a bit address of the memory 16 and performs counting operation with the second random number 22 set.

Next, the function of the second flip-flop 21 will be briefly described. To realize the above-mentioned operation, a stage for setting the second random number 22 within the memory 16 in the memory address counter 13 is temporarily necessary. This is set when the output of the second flip-flop 21 is "H". When the second random number 22 set in the memory address counter 13 is countedup or counted down to "0" by a clock from the reception unit, the output of the second flip-flop 21 is set to "L" so that information in the memory 16 such as the identification number 17 is sent out according to a memory address.

The reason why the first random number 11 and the second random number 22 are possessed is due to discrete probability of anti-collision control. Because the first random number 11 and the second random number 22 determine a memory data sending timing and further, they are written at random by user upon manufacturing of the IC chip 12 in advance, finite bit length is used.

Thus, it is not possible to avoid a collision of the same random numbers at a certain probability in viewpoints of principle. Whether or not such a collision occurs can be detected with a reception unit because error detection code deflects.

Thus, by sending a mode switching modulation signal from the reception unit to the IC chip 12, memory data is sent out again according to the second random number 22 possessed by each IC chip 12. Although a probability that the first random number 11 and the second random number 22 may collide with each other is not generally 0, the probability is extremely small.

### (Second illustrative example)

The second example useful to understand the present invention is, for example, an IC tag loaded with an IC chip, which includes additionally an error detection code as information in the memory 16 of the semiconductor device (IC chip 12) of the first example or the embodiment.

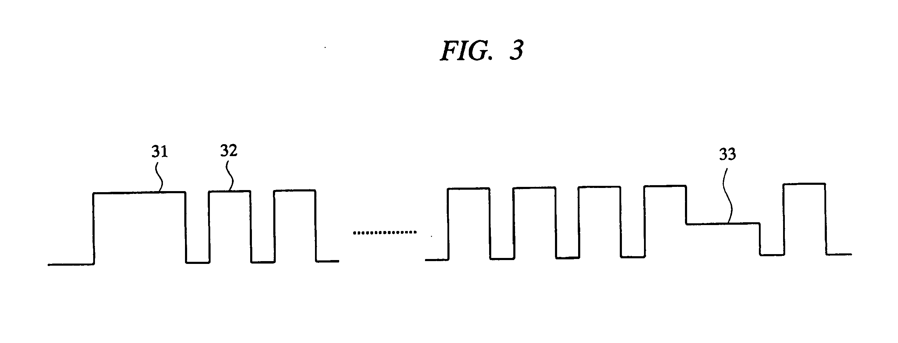

FIG. 3 is a signal waveform diagram showing a reception signal of the semiconductor device according to the second example.

The operation of the semiconductor device of the second example will be described with reference to FIG. 3. If a signal is received from outside by the IC chip 12, a carrier modulation signal 31 is changed from "L" level having no carrier to "H" level having a carrier. Then, this signal continues on the "H" level over a specific time and after that, drops to "L" level temporarily and after a specified time elapses, it turns to "H" level, so that it is recognized as a first clock signal 32.

After that, continuously, the clock signal is supplied to the IC tag containing the IC chip 12 from an antenna of the reception unit. All IC tags send out the content of a specified memory 16 according to this clock signal.

If the reception unit receives a specified bit and an error is found when the error detection code is recognized, the condition is that plural IC tags exist or that a true error occurs, the reception unit continues to send out the clock signal.

Each IC tag sets the first random number 11 in its own memory 16 in its own memory address counter 13 and progresses count-up or count-down with the clock signal according to the first random number 11. When the memory address counter 13 reaches "0", the content of the memory 16 is sent with the clock signal.

Further, the reception unit receives a predetermined bit so as to confirm an error detection code. Because if an error exists, it means that plural tags exist or a true error occurs, after the reception unit sends a specified clock to the IC tag, it sends out a mode switching modulation signal 33.

Consequently, each IC tag sets the second random number 22 in the memory 16 of the IC tag within its own memory address counter 13 and progresses count-up or count-down with the clock signal. When the memory address counter 13 reaches "0", it sends out information in its own memory 16 with the clock signal.

As description above, the IC chip 12 for sending out information in non-contact condition includes the memory 16 for memorizing the first random number 11 and other information than the first random number 11. The IC chips 12, which sends out information in the memory 16 according to a numeric value of the first random number 11 with a time difference, has an error detection code as well as the first random number 11. When plural IC chips 12 operate at the same time with an external clock, the error detection code is sent out from the plural IC chips at the same time. That error detection code is received by the reception unit as a logical sum and recognized to be an error detection code which never appears if a single IC chip sends and thus, the reception unit detects that plural IC chips 12 are operating.

The plural IC chips 12 for sending information in non-contact condition have a memory 16 which memorizes, in advance, the first random number 11 and the second random number 22 and other information than the first random number 11 and the second random number 22. When the plural IC chips 12 operate at the same time synchronously with an external clock and the reception unit detects that the plural IC chips 12 exist, each IC chip 12 sends out information in the memory 16 of the IC chip 12 according to a numeric value of the first random number 11. with a time difference. Further, when the reception unit detects that the plural IC chips 12 possess the same first random number 11, each IC chip 12 sends out information in the memory 16 of the IC chip 12 with a time difference according to a numeric value of the second random number 22. The IC chip 12 contains a memory address counter 13 indicating a bit address in the memory 16. The memory address counter 13 performs count operation with a numeric value of the second random number 22 set. After a specific modulation period (carrier modulation signal 31) after a last clock signal from outside is changed from "H" level to "L" level, the carrier attains a timing of returning to an initial carrier amplitude and then, a signal for setting the second random number 22 sends out information in the memory 16 of the IC chip 12.

As a consequence, anti-collision control can be performed with a simpler logic.

### (Anti-collision control method)

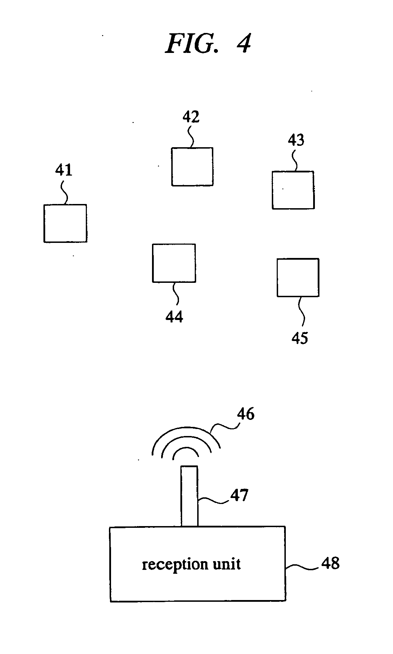

FIG. 4 is an explanatory diagram of anti-collision control method in case where plural IC tags exist.

A method of anti-collision control in case where plural IC tags exist will be described with reference to FIG. 4. In FIG. 4, first IC tags 41, second IC tags 42, third IC tags 43, fourth IC tags 44 and fifth IC tags 45 exist.

Electromagnetic wave 46 is irradiated from a reception unit antenna 47 to these IC tags. The reception unit 48 is capable of controlling this electromagnetic wave 46.

The first IC tag 41, the second IC tag 42, the third IC tag 43, the fourth IC tag 44 and the fifth IC tag 45 contain the IC chip 12 according to the first or second example or the embodiment. Each IC chip contains the random number described in the first or second example or the embodiment.

Data from each IC tag can be read by the reception unit 48 individually. For data read by the reception unit 48, the random number of each group and a random number error detection code are checked to verify whether or not reading is performed properly against noise. The error check method may be of cipher system having an evident algorithm or a cyclic redundancy check code.

Although five IC tags exist in this example, the quantity does not need to be five but 1,000 to 10,000 IC tags may exist.

### (IC tag)

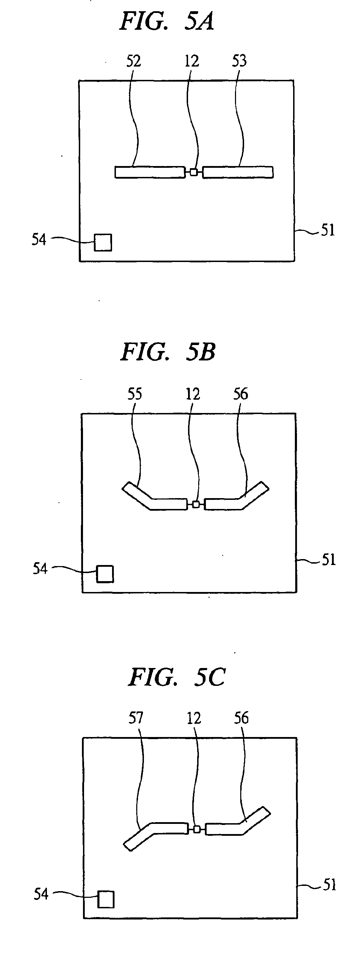

FIGs. 5A to 5C are configuration diagrams showing the IC tag loaded with the semiconductor device (IC chip 12) of the first or second example or the embodiment.

The implementation configuration of the semiconductor device (IC chip 12) of the first or second example or the embodiment will be described with reference to FIG. 5. As shown in FIGs. 5A to 5C, the IC tag is comprised of the IC chip 12 of the first or second example or the embodiment, a tag sheet 51, an index 54, and antennas 52, 53, 55, 56, 57.

Referring to FIG. 5A, the first straight antenna 52 and the second straight antenna 53 are connected to the IC chip 12 on the tag sheet 51. Further, the index 54 is attached to the tag sheet 51.

Further, referring to FIG. 5B, the first modified antenna 55 and the second modified antenna 56 are connected to the IC chip 12 on the tag sheet 51. The index 54 is attached to the tag sheet 51.

Referring to FIG. 5C, the third modified antenna 57 and the second modified antenna 56 are connected to the IC chip 12 on the tag sheet 51. The index 54 is attached to the tag sheet 51.

Although the positions of the tag sheet 51, the index 54 and the IC chip 12 are common, three kinds of the IC tags each having a different antenna configuration are achieved.

Meanwhile, the memory 16 of each IC chip 12 has a different identification number based on the technology described hereinbefore.

Although these IC tags are attached to various products and used for identifying each product, there exist a condition in which plural IC tags exist nearby.

If the antennas exist nearby, parasitic capacity is generated between the antennas so that the resonant frequency decreases. The reason is that because the resonant frequency is proportional to an inverse number of square roots of a product of antenna capacity and antenna inductance, the resonant frequency decreases if the antenna capacity is increased by addition of the parasitic capacity.

In a tag system for controlling anti-collision, a necessity of hopping the frequency of the reception unit is generated. If antennas of the same shape overlap, two antennas come to exist in the same electric wave area so that energy of each tag decreases, thereby inducing a drop in communication distance.

When antennas of FIGs. 5A, 5B, and 5C are overlapped, antenna patterns do not coincide completely. Thus, generation of parasitic capacity is suppressed and an area for obtaining electric wave is secured, so that it is possible to suppress drop in the resonant frequency and reduction in the obtained energy.

That is, such a device as hopping can be saved and an effect that no drop in the communication distance is induced can be expected.

The three kinds of the antenna patterns shown here are examples. If a number of patterns are created by changing the shape of the antenna, even if antennas of arbitrary kinds are overlapped, the probability that they coincide completely drops, thereby making it possible to carry out anti-collision control effectively.

In the meantime, the index 54 indicates the direction of the tag sheet 51 and is used for aligning the direction of the tag sheet when the tag sheet is bonded.

By adopting the above-described configuration for the semiconductor device of the first or second example or the embodiment, the effect of anti-collision control is further exerted.

Although the invention achieved by this inventor has been described specifically about its embodiment, the present invention is not restricted to the above-described embodiment and needless to say, may be modified in various ways within the scope of the claims.

For example, although in the above-described embodiment, the IC chip for sending information in non-contact condition has been described, the present invention is not restricted to this, but the present invention can be applied to other semiconductor devices and particularly, the ef fect of the present invention is more valid as the size of the semiconductor device decreases.

Further, although an example of application to the IC tag has been described, the present invention is not restricted to this but the present invention can be applied to other product such as the IC card.

### INDUSTRIAL APPLICABILITY

The present invention is effective for application to the configuration of the IC chip with anti-collision control function used in the semiconductor device, particularly the IC tag.

## Claims

1. A semiconductor device comprising:
a memory (16) memorizing first information including first and second random numbers (11, 22) and second information;
a mode switching unit (18); and
a memory address counter (13) indicating an address of the memory (16),
wherein
the mode switching unit (18) is adapted to select one of the random numbers (11, 22) in the memory (16) and: set it in the memory address counter (13) as an initial value,
the memory address counter (13) is adapted to count up or down with a clock signal (32) received from an external reception unit (48), and
when the count value reaches a predetermined value, the second information memorized at a memory bit address indicated by the predetermined value in the memory (16) is sent out to the external reception unit (48) in non-contact condition.

2. The device of claim 1, wherein the mode switching unit (18) is a flip-flop.

3. The device of claim 1 or 2, wherein the mode switching unit (18) is adapted to set said second random number (22) in the memory address counter (13) as the initial value, when receiving a mode switching signal (33) from the external reception unit (48).

4. A method of reading-out information from a plurality of semiconductor devices (12; 41 to 45) each comprising a memory (16) memorizing first information including first and second random numbers (11, 22) and second information, and a memory address counter (13) indicating an address of the memory (16), the method comprising the steps of:
sending out from a reception unit (48) to the semiconductor devices (12; 41 to 45) an electromagnetic wave including a clock signal (32);
setting, in the memory address counter (13), said first random number (11) as an initial value and counting up or down with the clock signal (32) to a predetermined value;
receiving, by the reception unit (48), the second information read out from a memory bit address in the memory (16) indicated by the predetermined value;
sending out, by the reception unit (48), a mode switching signal (33), when the reception unit receives the second information from the plurality of semiconductor devices (12; 41 to 45); and
setting, by the plurality of semiconductor devices (12; 41 to 45), said second random number (22) in the memory address counter (13) as the initial value.

5. The subject matter of any preceding claim, wherein the predetermined value is 0.

6. The subject matter of any preceding claim, wherein the memory address counter (13) and the random number (11, 22) have the same bit number.

7. The subject matter of any preceding claim, wherein the second information sent out to the external reception unit (48) comprises at least an identification number (17) of the semiconductor device (12) and an error detection code for detecting an error of the identification number.

8. The subject matter of any preceding claim, wherein the semiconductor device (12) further comprises an antenna (14).

9. The subject matter of any preceding claim, wherein the random numbers (11, 22) are manufacturer-supplied.

## Patentansprüche

1. Halbleiterbauelement mit
einem Speicher (16) zum Speichern einer ersten Information, die eine erste und eine zweite Zufallszahl (11, 22) aufweist, und einer zweiten Information,
einer Modusumschalteinheit (18), und
einem Speicheradressenzähler (13), der eine Adresse des Speichers (16) anzeigt,
wobei
die Modusumschalteinheit (18) dazu ausgelegt ist, eine der Zufallszahlen (11, 22) in dem Speicher (16) auszuwählen und diese in dem Speicheradressenzähler (13) als einen Anfangswert einzustellen,
der Speicheradressenzähler (13) dazu ausgelegt ist, gemäß einem von einer externen Empfangseinheit (48) empfangenen Taktsignal (32) nach oben oder nach unten zu zählen, und
wenn der Zählwert einen vorbestimmten Wert erreicht, die zweite Information, die an einer durch den vorbestimmten Wert angezeigten Speicherbitadresse in dem Speicher (16) gespeichert ist, kontaktlos an die externe Empfangseinheit (48) ausgesendet wird.

2. Bauelement nach Anspruch 1, wobei die Modusumschalteinheit (18) ein Flipflop ist.

3. Bauelement nach Anspruch 1 oder 2, wobei die Modusumschalteinheit (18) dazu ausgelegt ist, die zweite Zufallszahl (22) in dem Speicheradressenzähler (13) als den Anfangswert einzustellen, wenn ein Modusumschaltsignal (33) von der externen Empfangseinheit (48) empfangen wird.

4. Verfahren zum Auslesen von Information aus mehreren Halbleiterbauelementen (12; 41 bis 45), die jeweils einen Speicher (16) zum Speichern von erster Information, die eine erste und eine zweite Zufallszahl (11, 22) aufweist, und zweiter Information, sowie einen Speicheradressenzähler (13), der eine Adresse des Speichers (16) anzeigt, aufweisen, wobei in dem Verfahren
eine elektromagnetische Welle (16), die ein Taktsignal (32) aufweist, von einer Empfangseinheit (48) zu den Halbleiterbauelementen (12; 41 bis 45) ausgesendet wird,
die erste Zufallszahl (11) durch den Speicheradressenzähler (13) als ein Anfangswert eingestellt und gemäß dem Taktsignal (32) nach oben oder nach unten auf einen vorbestimmten Wert gezählt wird,
die aus einer durch den vorbestimmten Wert angezeigten Speicherbitadresse in dem Speicher (16) ausgelesene zweite Information durch die Empfangseinheit (48) empfangen wird,
ein Modusumschaltsignal (33) durch die Empfangseinheit (48) ausgesendet wird, wenn die Empfangseinheit die zweite Information von den mehreren Halbleiterbauelementen (12; 41 bis 45) empfangen hat, und
die zweite Zufallszahl (22) in dem Speicheradressenzähler (13) durch die mehreren Halbleiterbauelemente (12; 41 bis 45) als der Anfangswert eingestellt wird.

5. Patentgegenstand nach einem der vorstehenden Ansprüche, wobei der vorbestimmte Wert 0 ist.

6. Patentgegenstand nach einem der vorstehenden Ansprüche, wobei der Speicheradressenzähler (13) und die Zufallszahl (11; 22) die gleiche Bitzahl aufweisen.

7. Patentgegenstand nach einem der vorstehenden Ansprüche, wobei die zu der externen Empfangseinheit (48) ausgesendete zweite Information wenigstens eine Identifikationsnummer (17) des Halbleiterbauelements (12) und einen Fehlererfassungscode zum Erfassen eines Fehlers der Identifikationsnummer aufweist.

8. Patentgegenstand nach einem der vorstehenden Ansprüche, wobei das Halbleiterbauelement (12) ferner eine Antenne (14) aufweist.

9. Patentgegenstand nach einem der vorstehenden Ansprüche, wobei die Zufallszahlen (11, 22) vom Hersteller geliefert sind.

## Revendications

1. Dispositif à semi-conducteurs comportant :
une mémoire (16) mémorisant des premières informations incluant des premier et second nombres aléatoires (11, 22) et des secondes informations,
une unité de commutation de mode (18), et
un compteur d'adresses de mémoire (13) indiquant une adresse de la mémoire (16),
dans lequel
l'unité de commutation de mode (18) est adaptée pour sélectionner l'un des nombres aléatoires (11, 22) dans la mémoire (16) et définir celui-ci dans le compteur d'adresses de mémoire (13) en tant que valeur initiale,
le compteur d'adresses de mémoire (13) est adapté pour compter ou décompter à l'aide d'un signal d'horloge (32) reçu en provenance d'une unité de réception externe (48), et
lorsque la valeur de comptage atteint une valeur prédéterminée, les secondes informations mémorisées dans une adresse binaire de mémoire dans la mémoire (16) indiquée par la valeur prédéterminée sont envoyées à l'unité de réception externe (48) sans contact.

2. Dispositif selon la revendication 1, dans lequel l'unité de commutation de mode (18) est une bascule.

3. Dispositif selon la revendication 1 ou 2, dans lequel l'unité de commutation de mode (18) est adaptée pour définir ledit second nombre aléatoire (22) dans le compteur d'adresses de mémoire (13) en tant que valeur initiale, lors de la réception d'un signal de commutation de mode (33) en provenance de l'unité de réception externe (48).

4. Procédé de lecture d'informations à partir d'une pluralité de dispositifs à semi-conducteurs (12 ; 41 à 45) chacun comportant une mémoire (16) mémorisant des premières informations incluant des premier et second nombres aléatoires (11, 22) et des secondes informations, et un compteur d'adresses de mémoire (13) indiquant une adresse de la mémoire (16), le procédé comportant les étapes consistant à :
envoyer depuis une unité de réception (48) aux dispositifs à semi-conducteurs (12 ; 41 à 45) une onde électromagnétique incluant un signal d'horloge (32),
définir, par le compteur d'adresses de mémoire (13), ledit premier nombre aléatoire en tant que valeur initiale et compter ou décompter à l'aide du signal d'horloge (32) jusqu'à une valeur prédéterminée,
recevoir, par l'unité de réception (48), les secondes informations lues à partir d'une adresse binaire de mémoire dans la mémoire (16) indiquée par la valeur prédéterminée,
envoyer, par l'unité de réception (48), un signal de commutation de mode (33), lorsque l'unité de réception reçoit les secondes informations en provenance de la pluralité de dispositifs à semi-conducteurs (12 ; 41 à 45), et
définir, par la pluralité de dispositifs à semi-conducteurs (12 ; 41 à 45), ledit second nombre aléatoire (22) dans le compteur d'adresses de mémoire (13) en tant que valeur initiale.

5. Dispositif ou procédé selon l'une quelconque des revendications précédentes, dans lequel la valeur prédéterminée est 0.

6. Dispositif ou procédé selon l'une quelconque des revendications précédentes, dans lequel le compteur d'adresses de mémoire (13) et le nombre aléatoire (11, 22) ont le même nombre de bits.

7. Dispositif ou procédé selon l'une quelconque des revendications précédentes, dans lequel les secondes informations envoyées à l'unité de réception externe (48) comportent au moins un numéro d'identification (17) du dispositif à semi-conducteurs (12) et un code de détection d'erreur pour détecter une erreur du numéro d'identification.

8. Dispositif ou procédé selon l'une quelconque des revendications précédentes, dans lequel le dispositif à semi-conducteurs (12) comporte de plus une antenne (14).

9. Dispositif ou procédé selon l'une quelconque des revendications précédentes, dans lequel les nombres aléatoires (11, 22) sont fournis par le fabricant.
